Europäisches Patentamt

European Patent Office

Office européen des brevets

(11) Publication number: **0 146 366**
**A2**

(12) **EUROPEAN PATENT APPLICATION**

(21) Application number: **84308755.2**

(22) Date of filing: **14.12.84**

(51) Int. Cl.⁴: **A 01 D 34/63**

(30) Priority: **19.12.83 NZ 206618**

(43) Date of publication of application: **26.06.85 Bulletin 85/26**

(84) Designated Contracting States: **BE DE FR GB IT NL SE**

(71) Applicant: **Bannan, Peter Noel, R.D. 1, Murupara (NZ)**

(72) Inventor: **Bannan, Peter Noel, R.D. 1, Murupara (NZ)**

(74) Representative: **Rooney, Paul Blaise et al, D.Young & Co. 10 Staple Inn, London WC1V 7RD (GB)**

(54) **A rotary mower.**

(57) A rotary mower (10) which is preferably of the twin-disc type is described, the mower being particularly suitable for agricultural use. The mower includes a support frame (11) for mounting on a prime mover and preferably at least includes two blade carrying discs (14) mounted on the frame for rotation about spaced vertical axes (12, 13). Each disc is mounted so that it may move along its respective axis of rotation and thereby «float» according to changing ground contour.

"A ROTARY MOWER"

.This invention relates to a rotary mower having a support frame; a shaft mounted in said support frame for rotation about a substantially vertical axis; and a plurality of cutting members rotatable with said shaft in a substantially horizontal plane or planes.

Disc type, and more particularly twin-disc type rotary mowers are well known especially in the agricultural field and a wide variety of such mowers are produced commercially.

These mowers are typically mounted on the three point linkage of an agricultural tractor. The mounting arrangement usually includes a combination of pivotal members and a damper so that the mower can, to some extent, "float" with respect to the tractor and thereby move according to irregularities in the ground surface over which the apparatus travels.

The mowers are generally bulky and thus do not respond quickly to changes in surface contour. For this reason the rotating cutting members often contact the hard ground surface and are damaged, or, at least, subjected to accelerated wear.

There is thus a need for an improved rotary mower in which the rotating cutting members can "float" within and with respect to the support frame and thus allow the machine to respond more rapidly to changes in ground contour.

According to the present invention there is provided a rotary mower comprising a support frame;a shaft mounted in said support frame to rotate about a substantially vertical axis; and a plurality of cutting members rotatable with said shaft in a plane or planes substantially

-2-

perpendicular to the axis of rotation, characterised in that the plane or planes in which said cutting members rotate are displaceable in a direction parallel to the axis of rotation.

The cutting members are preferably mounted on one or more discs which in turn are mounted on the shaft for rotation therewith. This shaft is preferably slidable, along its axis, within the support frame.

One way of carrying out the invention is described in detail below with reference to the accompanying drawings which illustrate only one specific embodiment, in which:

Fig 1 shows a plan view of a rotary mower according to the invention;

Fig 2 shows an elevational view, partly in cross section, of a rotary mower according to the invention;

Fig 3 shows a partial cross sectional view of an alternative configuration of disc member incorporated in a rotary mower according to the invention; and

Fig 4 shows a plan view of one form of cutting member suitable for incorporation in a rotary mower according to the invention.

Referring to the drawings, according to the invention, a rotary mower 10 is provided comprising a support frame 11 in which one and preferably a pair of shafts 12 and 13 are mounted so as to rotate about substantially vertical and parallel axes. Mounted for rotation with each of the shafts 12 and 13 are a plurality of cutting members 15, the cutting members 15 being preferably mounted on one or more disc members 14 so as to project beyond the peripheries thereof. It will be appreciated that the cutting members rotate in horizontal planes and thus sever plant growth extending up from the ground over which the apparatus is displaced when in use.

The support frame 11 is preferably constructed and arranged for mounting on a prime mover although the principles embodied in the invention could be incorporated in a "stand-alone" rotary mower. The prime mover is typically a common farm tractor and to this end the support frame 11 preferably includes suitable brackets (now shown) on the inner end 16 thereof whereby the apparatus may be mounted on the three point linkage of the tractor. Intermediate linkages (not shown) may further be provided between the support frame 11 and the three point linkage of the tractor to allow for adjustment of the position of the apparatus or displacement of the apparatus with respect to the prime mover.

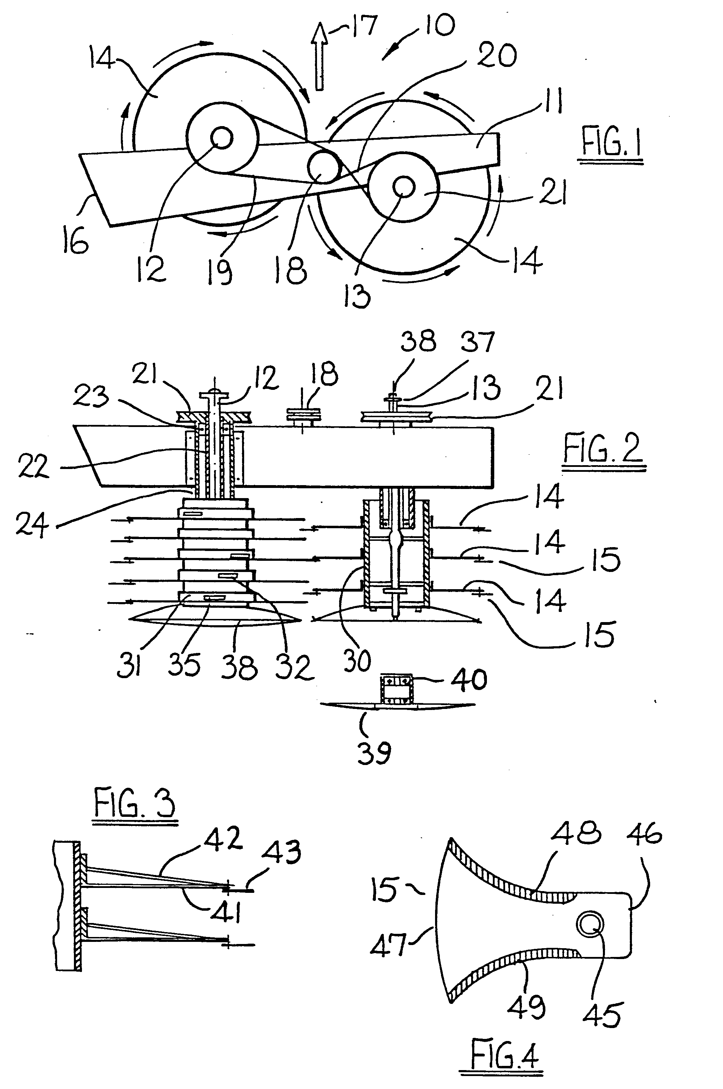

As is stated above the provision of two shafts 12 and 13 is optional although preferable and, as can be seen from fig 1, the shaft 12 is preferably mounted ahead of the shaft 13 when viewed with respect to the direction of travel of the apparatus which is indicated by arrow 17. This arrangement allows the outer tips of the cutting members 15 mounted on discs 14 attached to the shaft 13 to be set in behind the cutting members mounted on the discs attached to the shaft 12 and thereby ensure that a single cut path is provided upon displacement of the apparatus.

The shafts 12 and 13 contra rotate with respect to one another and suitable drive means is provided to impart rotation to the shafts 12 and 13. In the form shown a single hydraulic motor 18 is provided which rotates in a clockwise direction as shown in fig 1. The hydraulic motor 18 is supplied with fluid under pressure from a pump (not shown) preferably driven from the tractor power-take-off and drive is imparted to shaft 12 through endless belt 19 while shaft 13 is driven from a further crossed over belt 20. Drive pulleys 21 keyed or otherwise fixed to the shafts 12 and 13 receive the drive from the motor 18 through the belts 19 and 20 and transmit the drive to the shafts 12 and 13. As one alternative the motor 18 could be replaced by a mechanical drive pick-up and rotated through a suitable linkage or transmission from the power-take-off of the prime mover. As a further alternative, one hydraulic motor could be provided for each rotating shaft. The motor would preferably be mounted on top of the shafts 12 and 13 so that the motor drives were directly coupled to the shafts 12 and 13. The motor bodies would be retained in sliding guides for the reasons hereinafter appearing.

In accordance with the invention the plane or planes in which the blades rotate, i.e. the planes of the discs 14, are vertically displaceable with respect to the support frame 11. This is advantageously achieved by configuring the apparatus so that the shafts 12 and 13, with the blades or discs fixed thereon, are vertically displaceable.

To this end the pulleys 21 are incorporated in suitable drive means which not only imparts rotation to each of the shafts 12 and 13 but also, preferably allows the shafts to float axially. As can be seen the pulleys 21 are mounted on the upper ends of spindles 22 which project downwardly and surround the shafts 12 and 13. The spindles 22 are, in turn, mounted in bearings 23 which are located in tubular mounts 24 fixed to the support frame 11. The inner surface of each of the spindles 22 is preferably splined and the outer surface of each of the shafts 12 and 13 is preferably provided with a corresponding spline so that the shafts 12 and 13 are axially slidable within the spindles 22 and may thus float within the spindles 22 while being rotated thereby.

The lowermost position of each of the shafts 12 and 13 is determined by a float limiting member 37 mounted on the upper end of each of the shafts 12 and 13 and when this float limiting member 37 engages the upper surface of the drive pulleys 21 no further downward displacement can occur. The float limiting member 37 is preferably held in place by a locking nut 38 and by removing the nut 38 the shaft can be withdrawn from its spindle for servicing of the cutting members 15 and/or discs 14.

Mounted on the lower end of each of the shafts 12 and 13 is a skid member 29 which is preferably freely rotatable, through bearings 40, on the bottom of its respective shaft. A locating nut (not shown) holds the skid member 39 in place on its respective shaft.

A tubular hub 30 is mounted about the lower section of each shaft 12 and 13 and the disc members 14 which carry the cutting members 15 are mounted on the outer peripheries of the hubs 30 although it will be appreciated that the cutting members 15 could be mounted directly on the hub 30.

In the embodiment shown each disc member 14 has a central sleeve 3 which engages about the hub 30 and is held thereto by locking means 32. The locking means 32 and the sleeves 31 are preferably constructed and ararnged so that the angular positions of the discs 14 can be adjusted about the periphery of the hub 30. In this manner the angular positions of the cutting members 15 about the peripheries of the hubs 30 can be adjusted and thus, when viewed vertically as in fig 1, the positions of the cutting members on the various discs can be staggered. This is preferably achieved by providing the sleeves 31 with peripherally extending slots 35 and providing the locking means 32 in the form of clamping bolts which engage in threaded holes provided in the hub 30.

In use, if more than one disc 14 is provided, the discs are mounted so that the cutting members 15 on the uppermost disc comprise the leading cutting members, the cutting members trailing sequentially from top to bottom so that plant growth being cut by a rotary mower according to the invention is first cut by the cutting members mounted on the upper discs then by those on the next disc down and so on, the final cut being made by the cutting members mounted on the lowermost disc.

While the disc members 14 are preferably shown in the form of flat circular plate members, in practice some degree of curvature will preferably be provided to impart strength to the disc and minimize distortion thereof.

In applications where discs of relatively large diameter e.g. 1.6m, are required the discs may be fabricated rather than being fomed from a single plate and such an embodiment of disc is shown in fig 3. In this embodiment the disc comprises a lower plate member 41 and an upper plate member 42, the two plate members, in combination, defining a composite disc-like unit having a rotating triangular cross section. The cutting members 43 are mounted so as to extend from the periphery of the composite disc in the same manner as described above.

Whichever embodiment of disc member is chosen the cutting members 15 are preferably of the form shown in fig 4. As can be seen each of the cutting members has a single aperture 45 whereby the cutting member may be mounted onto the disc 14. The mounting is preferably such that the cutting member can pivot about the axis of aperture 45 and it will be noted that the aperture 45 is positioned closer to the inner end of the cutting member so as to ensure that, in operation, the tip is held outwardly by centrifugal force.

In the form shown the cutting member 15 has a root 46, a tip 47, a leading edge 48 and a trailing edge 49. It will be noted that when viewed with respect to a line 50 passing radially through the centre of rotation the leading edge 48 at the top 47 lies ahead of the leading edge at the root. Further, the trailing edge of the tip preferably lies rearwardly of the trailing edge at the root and, as can be seen, the blade 15 is preferably summetrical about its central axis. Thus, when the leading edge 48 wears, the blade can be removed and inverted so that the trailing edge then becomes the leading edge.

The blade as shown is preferably formed from a planar material such as sheet spring steel and is mounted so as to make edgewise engagement with growth extending up from the ground.

The apparatus as above described has been devised particularly for providing a rotary mower for cutting grass or other forage crops grown on uneven ground. By preferably providing for each drum to float vertically, the drums can follow the contour independently of each other which eliminates missed areas and greatly reduces scalping shock loading and drag.

A further advantage of the preferred embodiment described is that it provides means for cutting the crop into very short lengths. The cutting of grass and forage crops to short lengths provided material which dries faster, requires less power to silerate, packs more tightly into transport bins and all this means that less time and power is required to harvest crops. The cutting of the grass into short lengths also reduces the drag of long material and minimizes the wrapping of long material about the cutting shafts.

To those skilled in the art to which the invention relates, many changes in construction and widely differing embodiments and applications of the invention will suggest themselves without departing from the scope of the invention as defined in the appended claims. The disclosures and

0146366

-8-

the descriptions herein are purely illustrative and are not intended to be in any sense limiting.

CLAIMS:

1.        A rotary mower comprising a support frame (11); a shaft (12, 13) mounted in said support frame to rotate about a substantially vertical axis; and a plurality of cutting members (15) rotatable with said shaft (12, 13) in a plane or planes substantially perpendicular to the axis of rotation, characterised in that the plane or planes in which said cutting members (15) rotate are displaceable in a direction parallel to the axis of rotation.

2.        A mower as claimed in claim 1, wherein said cutting members (15) are mounted on one or more disc members (14), said disc member or members (14) being fixed to said shaft for (12, 13) rotation therewith.

3.        A mower as claimed in claim 1 or claim 2, wherein said shaft (12, 13) is displaceable along the axis thereof within said support frame (11).

4.        A mower as claimed in any one of claims 1 to 3, including drive means (18, 29, 20) to impart rotation to said shaft (12, 13).

5.        A mower as claimed in claim 4, wherein said shaft (12, 13) is axially displaceable with respect to said drive means (18, 29, 20).

6.        A mower as claimed in any one of claims 1 to 5, wherein two shafts (12, 13) are provided, said shafts (12, 13) and said cutting members (15) being mounted so as to provide a single cutting path.

7.        A mower as claimed in claim 6, including a skid (39) provided on the bottom end of each shaft (12, 13).

0146366

-10-

8.        A mower as claimed in claim 7, wherein said skid (30) is mounted to freely rotate on the bottom end of its shaft (12, 13).

0146366

FIG.1

FIG.2

FIG.3

FIG.4